Europäisches Patentamt

European Patent Office

Office européen des brevets

(11) Veröffentlichungsnummer : **0 160 836 B1**

(12) **EUROPÄISCHE PATENTSCHRIFT**

(45) Veröffentlichungstag der Patentschrift :
20.09.89

(51) Int. Cl.⁴ : **G 01 K 7/00**

(21) Anmeldenummer : 85103991.7

(22) Anmeldetag : 02.04.85

(54) **Temperatursensor.**

(30) Priorität : 10.05.84 DE 3417211

(43) Veröffentlichungstag der Anmeldung :
13.11.85 Patentblatt 85/46

(45) Bekanntmachung des Hinweises auf die Patenterteilung : 20.09.89 Patentblatt 89/38

(84) Benannte Vertragsstaaten :
DE FR GB SE

(56) Entgegenhaltungen :
DE—A— 2 605 389
US—A— 3 851 241
US—A— 3 916 508
US—A— 4 004 462
US—A— 4 138 616
ELECTRONICS, Band 47, Nr. 23, 14. November 1974, Seiten 130-132, New York, US; M.J. RIEZENMAN: "Integrated temperature transducers"
IEEE JOURNAL OF SOLID-STATE CIRCUITS, Band SC-17, Nr. 6, Dezember 1982, Seiten 1198-1200, IEEE, New York, US; D. VAN MAAREN et al.: "An integrated micropower low-voltage temperature-controlled oscillator"

(73) Patentinhaber : **ROBERT BOSCH GMBH**
**Postfach 50**
**D-7000 Stuttgart 1 (DE)**

(72) Erfinder : **Günther, Uwe, Dipl.-Ing.**
**Hagstrasse 38**
**D-7031 Nufringen (DE)**
Erfinder : **Nagel, Karl**
**Grundstrasse 24**
**D-7413 Gomaringen (DE)**
Erfinder : **Kalkhof, Bernd, Dipl.-Ing.**
**Am Rosenbach 10**
**D-7410 Reutlingen (DE)**

EP 0 160 836 B1

EP 0 160 836 B1

**Beschreibung**

Stand der Technik

Die Erfindung betrifft einen Temperatursensor nach der Gattung des unabhängigen Anspruches 1.

Aus der US-PS 39 16 508 ist bereits eine stromgespeiste Referenzspannungsquelle bekannt, die in einem ersten Stromzweig die Reihenschaltung aus einer bestimmten Anzahl hintereinandergeschalteter, in Flußrichtung betriebener Dioden und einer bestimmten Anzahl hintereinandergeschalteter Z-Dioden und in einem zweiten Stromzweig, der parallel zum ersten Stromzweig angeordnet ist, die Reihenschaltung aus einer bestimmten Anzahl hintereinandergeschalteter, ebenfalls in Flußrichtung betriebener Dioden und einem ohmschen Spannungsteiler enthält und bei der die Referenzspannung am Abgriff des Spannungsteilers abgenommen wird. Mit dieser Schaltung lassen sich zwar außer temperaturunabhängigen Referenzspannungen auch solche mit einem positiven oder negativen Temperaturkoeffizienten erzeugen, so daß die Schaltung nicht nur als Konstantspannungsquelle, sondern auch als spannungsgebender Temperatursensor anwendbar ist. Wird ein bestimmter Temperaturkoeffizient gewünscht, so lassen sich hierbei aber nur bestimmte Spannungswerte für die Ausgangsspannung des Sensors realisieren.

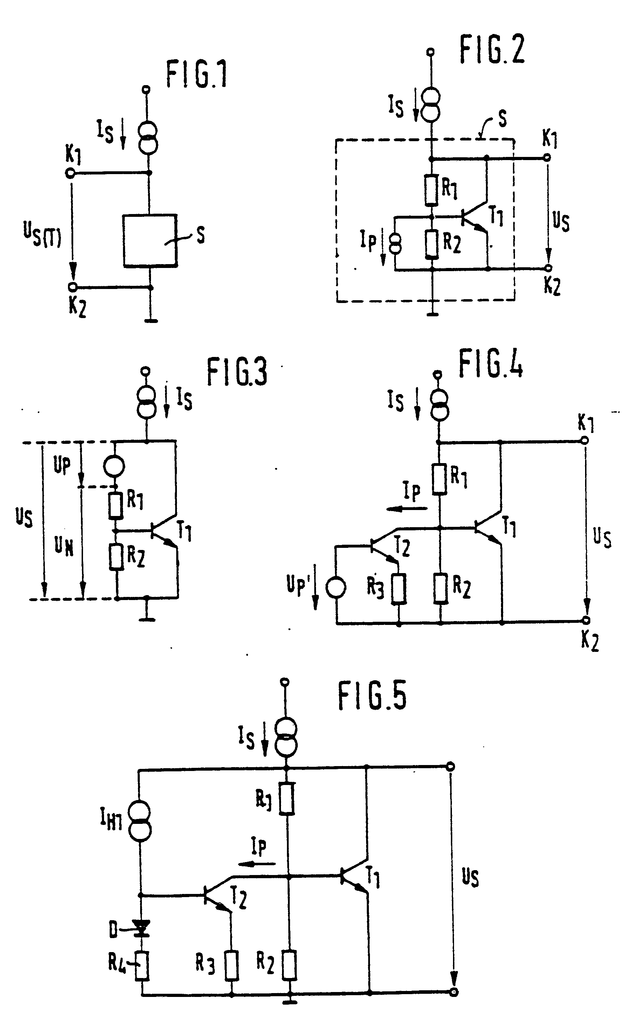

Ferner sind auch schon Schaltungsanordnungen bekanntgeworden, die kontinuierlich einstellbare temperaturabhängige Ausgangsspannungen mit nur positivem Temperaturkoeffizienten liefern. So ist beispielsweise aus der Zeitschrift IEEE Journal of Solid State Circuits, Vol. SC-17, No. 6 (Dezember 1982), Seite 1198, Figur 3, eine Schaltungsanordnung bekannt, die einen zur Celsius-Temperatur proportionalen Ausgangsstrom liefert und zur Erzeugung dieses Ausgangsstroms eine interne Referenzspannung mit positivem Temperaturkoeffizienten bereitstellt, die der absoluten Temperatur proportional ist.

Aus der DE-OS 26 05 389 ist des weiteren eine Schaltung mit linear temperaturabhängigem Gesamtwiderstand bekannt, die insbesondere als Temperaturfühler für Heizungsanlagen zur Erfassung der Außentemperatur der Luft dient. Der temperaturabhängige Gesamtwiderstand wird bei dieser bekannten Schaltung im wesentlichen vom Widerstand der Emitter-Kollektor-Strecke eines der zu messenden Temperatur ausgesetzten Transistors gebildet, dessen Basis an die Mittelanzapfung eines Spannungsteilers angeschlossen ist, der zwischen den Emitter und den Kollektor des Transistors geschaltet ist. Diese in der Literatur häufig auch mit « $U_{BE}$-Verstärker » bezeichnete Schaltung hat einen negativen Temperaturkoeffizienten. Wenn in diese bekannte Schaltung ein mindestens annähernd konstanter Strom eingeprägt wird, ist es möglich, durch Variation des Teilerverhältnisses des Spannungsteilers bei geeigneter Wahl der Absolutwerte seiner Widerstände die an der Emitter-Kollektor-Strecke des Transistors abfallende Spannung und deren negativen Temperaturkoeffizienten kontinuierlich zu ändern. Hierbei besteht jedoch der Nachteil, daß der Betrag des einstellbaren Temperaturkoeffizienten (bei einer bestimmten Bezugstemperatur) an den Wert derjenigen Spannung gebunden ist, die bei der bekannten Schaltung an der Emitter-Kollektor-Strecke des Transistors bei Einprägung eines mindestens annähernd konstanten Stroms in die Schaltung abfällt.

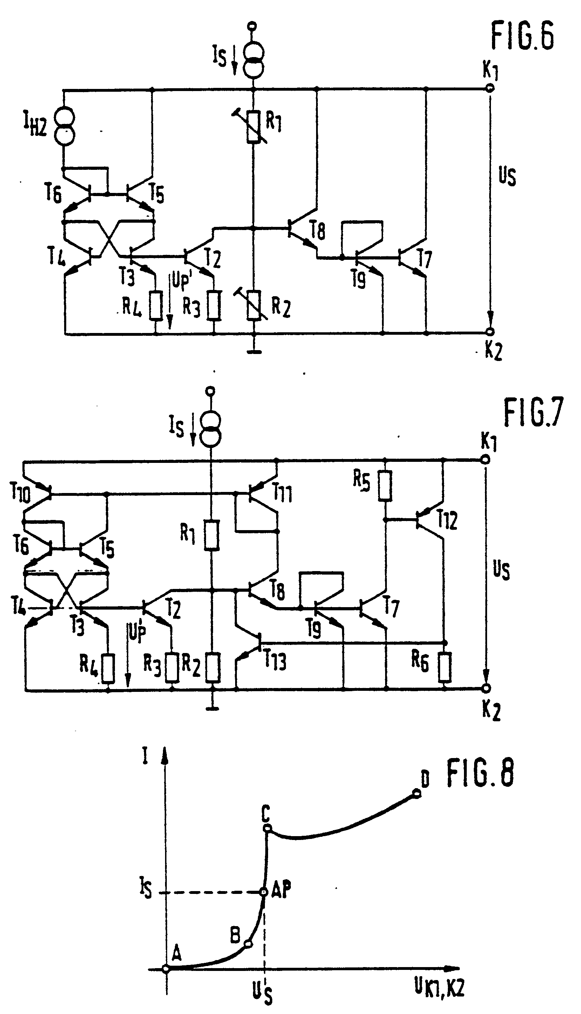

Aus dem Lehrbuch von H. M. Rein und R. Ranfft « Integrierte Bipolarschaltungen (Halbleiter-Elektronik, Band 13) », Springer-Verlag, Seite 272, Abb. 5-6-1a, ist weiterhin ein Temperatursensor nach der Gattung des Hauptanspruchs bekannt. Diese Schaltung unterscheidet sich von der oben beschriebenen, aus der DE-OS 26 05 389 bekannten Schaltung lediglich dadurch, daß bei der in dem genannten Lehrbuch beschriebenen Schaltung von der Einprägung eines mindestens annähernd konstanten Stroms in die Schaltung von vorne herein ausgegangen wird. Wenn durch Variation des Teilerverhältnisses des Spannungsteilers die Ausgangsspannung des Sensors und deren negativer Temperaturkoeffizient kontinuierlich geändert werden sollen, besteht auch hier der oben im Zusammenhang mit der Schaltung nach der DE-OS 26 05 389 beschriebene Nachteil.

Vorteile der Erfindung

Der erfindungsgemäße Temperatursensor mit den kennzeichnenden Merkmalen des Anspruches 1 hat demgegenüber den Vorteil, daß sich die Ausgangsspannung des Sensors aus zwei Teilspannungen mit zueinander entgegengesetzten Temperaturkoeffizienten, nämlich aus der Ausgangsspannung des an sich bekannten « $U_{BE}$-Verstärkers » gemäß dem Oberbegriff des Hauptanspruchs, die einen negativen Temperaturkoeffizienten aufweist, und aus der an dem ersten Widerstand des Spannungsteilers dieses Verstärkers erfindungsgemäß zusätzlich abfallenden Hilfsspannung, die einen positiven Temperaturkoeffizienten aufweist, zusammensetzt, so daß die resultierende Ausgangsspannung des Sensors (bei einer bestimmten Bezugstemperatur) und deren resultierender Temperaturkoeffizient durch geeignete Wahl der Widerstandswerte der beiden ohmschen Widerstände des Spannungsteilers in einem weiten Bereich unabhängig voneinander eingestellt werden können.

Abhängig davon, wie groß der Anteil der beiden Teilspannungen an der resultierenden Ausgangsspannung des Sensors gewählt wird, kann ein größerer oder kleinerer negativer Temperaturkoeffizient der Ausgangsspannung eingestellt werden. Im Grenzfall kann hierbei die Ausgangsspannung sogar den Temperaturkoeffizienten Null oder einen kleinen positiven Temperaturkoeffizienten erhalten. Aufgrund des geringen differentiellen Innenwiderstandes, den der Sensor in seinem aktiven Bereich besitzt, ist die temperaturabhängige Ausgangsspannung außerdem weitgehend unempfindlich gegenüber Schwankungen des in den Sensor eingeprägten Stroms. Weitere Vorteile des erfindungsgemäßen Sensors ergeben sich aus den Unteransprüchen 2 bis 10 und aus der Beschreibung.

Zeichnung

Ausführungsbeispiele der Erfindung sind in der Zeichnung dargestellt und in der nachfolgenden Beschreibung näher erläutert. Es zeigen : Figur 1 die symbolische Darstellung eines stromgespeisten, spannungsgebenden Sensors ; Figur 2 ein einfaches Ausführungsbeispiel eines erfindungsgemäßen Sensors mit Speisestromquelle, Spannungsteiler, Ausgangstransistor und Hilfsstromquelle ; Figur 3 das Ersatzschaltbild des Sensors nach Figur 2 ; Figur 4 einen Sensor wie in Figur 2, jedoch mit einem steuerbaren Transistor mit Emitterwiderstand als Hilfsstromquelle ; Figur 5 und Figur 6 je einen Sensor wie in Figur 4, jedoch mit einer Steuerschaltung zur Ansteuerung des steuerbaren Transistors ; Figur 7 ein Ausführungsbeispiel wie in Figur 6, jedoch mit Stromspiegelschaltung zur Einspeisung eines bestimmten Stromes in die Steuerschaltung ; Figur 8 die Strom-Spannungs-Kennlinie des Ausführungsbeispiels nach Figur 7.

Beschreibung der Ausführungsbeispiele

In Figur 1 ist ein stromgespeister, spannungsgebender Temperatursensor S schematisch dargestellt. Der Sensor S ist ein Zweipol. Wird dem Sensor S ein konstanter Strom $I_S$ eingeprägt, so stellt sich zwischen seinen beiden Ausgangsklemmen $K_1$ und $K_2$ eine temperaturabhängige Ausgangsspannung $U_S(T)$ ein.

Figur 2 zeigt ein erstes Ausführungsbeispiel einer Realisierung eines stromgespeisten, spannungsgebenden Temperatursensors nach Figur 1. Beim Ausführungsbeispiel nach Figur 2 enthält der Temperatursensor S einen Spannungsteiler, der aus einem ersten und einem zweiten ohmschen Widerstand $R_1$ und $R_2$ besteht, sowie einen als Ausgangstransistor dienenden npn-Transistor $T_1$, der mit seiner Basis-Kollektor-Strecke über dem ersten Widerstand $R_1$ und mit seiner Basis-Emitter-Strecke über dem zweiten Widerstand $R_2$ des Spannungsteilers $R_1$, $R_2$ liegt. Dieser Teil der Schaltungsanordnung wird in der Literatur allgemein als « $U_{BE}$-Verstärker » bezeichnet. Ferner liegt über dem zweiten Widerstand $R_2$ des Spannungsteilers $R_1$, $R_2$ eine Hilfsstromquelle $I_p$, die ebenfalls Bestandteil des Sensors S ist. Die temperaturabhängige Ausgangsspannung $U_S(T)$ des Sensors S wird wie in der schematischen Darstellung nach Figur 1 zwischen den Ausgangsklemmen $K_1$ und $K_2$ abgenommen.

Die Wirkungsweise der Schaltungsanordnung nach Figur 2 ist folgende :

Die Ausgangsspannung $U_S(T)$ setzt sich aus einer ersten Teilspannung $U_P(T)$ mit negativem Temperaturkoeffizienten und einer zweiten Teilspannung $U_P(T)$ mit positivem Temperaturkoeffizienten zusammen. Wie im Ersatzschaltbild nach Figur 3 angedeutet, ist die erste Teilspannung $U_N(T)$ derjenige Spannungsabfall, der an den äußeren Enden des Spannungsteilers $R_1$, $R_2$ abfällt, wenn die zusätzlich über dem zweiten Widerstand $R_2$ des Spannungsteilers des « $U_{BE}$-Verstärkers » $R_1$, $R_2$, $T_1$ angebrachte Hilfsstromquelle $I_p$ außer acht gelassen wird. Die zweite Teilspannung $U_P$ ist derjenige Spannungsabfall, der am Widerstand $R_1$ durch die Wirkung der Hilfsstromquelle $I_p$ zusätzlich abfällt und sich zu der ersten Teilspannung $U_N$ addiert :

$$(1) \qquad U_S(T) = U_N(T) + U_P(T)$$

Durch geeignete Wahl der Widerstandswerte der Widerstände $R_1$ und $R_2$ und/oder durch Abgleich dieser Widerstände können somit die Ausgangsspannung $U_S(T)$ des Sensors (bei einer bestimmten Bezugstemperatur) und der Temperaturkoeffizient dieser Ausgangsspannung in einem weiten Bereich unabhängig voneinander eingestellt werden.

In Figur 4 ist das Ausführungsbeispiel nach Figur 2 weiter ausgestaltet. Als Hilfsstromquelle zur Einspeisung des Hilfsstroms $I_P$ in den Widerstand $R_1$ ist ein als Steuertransistor dienender zweiter npn-Transistor $T_2$ vorgesehen, dessen Kollektor mit dem Abgriff des Spannungsteilers $R_1$, $R_2$ verbunden ist und der mit seinem Emitter über einen dritten ohmschen Widerstand $R_3$ mit dem Emitter des ersten Transistors $T_1$ verbunden ist. Zwischen die Basis des zweiten Transistors $T_2$ und den Emitter des ersten Transistors $T_1$ ist eine Steuerspannung $U_P'$ angelegt. Durch diese Steuerspannung wird der zweite Transistor $T_2$ so angesteuert, daß er einen Kollektorstrom $I_P$ mit positivem Temperaturkoeffizienten in den ersten Widerstand $R_1$ des Spannungsteilers $R_1$, $R_2$ einspeist. Die Wirkungsweise der Schaltungsanordnung nach Figur 4 ist also dieselbe wie diejenige der Schaltungsanordnung nach Figur 2.

In Figur 5 ist ein Ausführungsbeispiel dargestellt, das eine erste Realisierungsmöglichkeit für die in Figur 4 angedeutete Ansteuerung des zweiten Transistors $T_2$ enthält. Zur Bildung der Steuerspannung $U_P'$ aus Figur 4 ist hier eine Stromquelle $I_{H1}$ mit positivem Temperaturkoeffizienten, eine in Flußrichtung betriebene Diode D und ein vierter ohmscher Widerstand $R_4$ vorgesehen. Die Stromquelle $I_{H1}$ ist zwischen den Kollektor des ersten Transistors $T_1$ und die Basis des zweiten Transistors $T_2$ gelegt, während die Reihenschaltung aus der in Flußrichtung betriebenen Diode D und dem vierten ohmschen

Widerstand $R_4$ zwischen der Basis des zweiten Transistors $T_2$ und dem Emitter des ersten Transistors $T_1$ in der vorbeschriebenen Reihenfolge angeordnet ist. Durch die Wirkung der Stromquelle $I_{H1}$, die einen positiven Temperaturkoeffizienten aufweist, wird der zweite Transistor $T_2$ im Zusammenwirken mit der Diode D und dem vierten Widerstand $R_4$ so angesteuert, daß er in den Widerstand $R_1$ einen Strom $I_P$ mit positivem Temperaturkoeffizienten einspeist, der in diesem Widerstand den gewünschten zusätzlichen Spannungsabfall $U_P$ mit positivem Temperaturkoeffizienten erzeugt, der sich nach Gleichung (1) mit dem Spannungsabfall $U_N$ mit negativem Temperaturkoeffizienten, der in den Widerständen $R_1$ und $R_2$ durch die Wirkung des « $U_{BE}$-Verstärkers » $R_1$, $R_2$, $T_1$ erzeugt wird, zur Sensorspannung $U_S$ überlagert.

In Figur 6 ist ein Ausführungsbeispiel dargestellt, das eine zweite Realisierungsmöglichkeit für die in Figur 4 angedeutete Ansteuerung des zweiten Transistors $T_2$ enthält. Zur Bildung der Steuerspannung $U_P'$ sind hier Schaltungselemente $R_4$, $T_3$, $T_4$, $T_5$, $T_6$, $I_{H2}$ vorgesehen. Zwischen der Basis des zweiten Transistors $T_2$ und dem Emitter des ersten, in Figur 6 durch die Transistoren $T_7$, $T_8$, $T_9$ ersetzten Transistors $T_1$ ist hierbei die Reihenschaltung aus der Basis-Emitter-Strecke des dritten npn-Transistors $T_3$ und des vierten ohmschen Widerstandes $R_4$ angeordnet, dessen mit dem dritten ohmschen Widerstand $R_3$ verbundenes Ende außerdem mit dem Emitter des vierten npn-Transistors $T_4$ verbunden ist. Die Basis des vierten Transistors $T_4$ ist dabei an den Kollektor des dritten Transistors $T_3$ und die Basis des dritten Transistors $T_3$ an den Kollektor des vierten Transistors $T_4$ angeschlossen. Ferner ist der fünfte npn-Transistor $T_5$ vorgesehen, dessen Emitter an den Kollektor des dritten Transistors $T_3$ und dessen Basis an die Basis und an den Kollektor des sechsten npn-Transistors $T_6$ angeschlossen ist. Der sechste Transistor $T_6$ ist dabei mit seinem Emitter an den Kollektor des vierten Transistors $T_4$ und mit seinem Kollektor über die Stromquelle $I_{H2}$ an den Kollektor des fünften Transistors $T_5$ und an das äußere Ende des ersten Widerstandes $R_1$ des Spannungsteilers $R_1$, $R_2$ angeschlossen. Die Emitterflächen der beiden Transistoren $T_4$ und $T_3$ verhalten sie wie $1 : 7$, die Emitterflächen der beiden Transistoren $T_6$ und $T_5$ wie $7 : 1$.

Das Ausführungsbeispiel nach Figur 6 enthält ferner eine modifizierte Ausgestaltung des Schaltungsteils, der den an sich bekannten « $U_{BE}$-Verstärker » bildet. Die Widerstände $R_1$ und $R_2$ sind hierbei unverändert beibehalten und als abgleichbare Widerstände ausgebildet. Der erste, als Ausgangstransistor dienende Transistor $T_1$ aus den Figuren 2 bis 4 ist dagegen durch eine Darlingtonschaltung ersetzt worden, die einen siebten npn-Transistor $T_7$ und einen achten npn-Transistor $T_8$ enthält, wobei der Transistor $T_7$ den Endtransistor und der Transistor $T_8$ den Vortransistor der Darlingtonschaltung bildet und die Ausgangsspannung $U_S$ des Sensors an der Emitter-Kollektor-Strecke des siebten Transistors $T_7$ abgenommen wird und die Basis des achten Transistors $T_8$ am Abgriff des Spannungsteilers $R_1$, $R_2$ liegt. Bestandteil der Darlingtonschaltung ist ferner ein als Emitter-Basis-Diode geschalteter neunter npn-Transistor $T_9$, der zwischen der Basis und dem Emitter des siebten Transistors $T_7$ angeordnet ist.

Die Ausgangspanung $U_S(T)$ des Sensors nach Figur 6 setzt sich wie bei den Ausführungsbeispielen nach den Figuren 2 bis 5 gemäß Gleichung (1) aus der Summe zweier Teilspannungen $U_N(T)$ und $U_P(T)$ mit entgegengesetzten Temperaturkoeffizienten zusammen. Die Spannungsquelle mit negativem Temperaturkoeffizienten besteht wieder aus demjenigen Schaltungsteil, der den an sich bekannten « $U_{BE}$-Verstärker » bildet, also hier aus den Schaltungselementen $R_1$, $R_2$, $T_7$, $T_8$ und $T_9$. Die von ihr gelieferte Spannung $U_N(T)$ ergibt sich zu :

$$(2) \qquad U_N = \left(1 + \frac{R_1}{R_2}\right) \cdot 2\, U_{BE} + R_1 \cdot I_C(T_8) \cdot \frac{1}{B} \cdot$$

Hierin bedeuten :
$R_1$ : den Ohmwert des ersten ohmschen Widerstandes $R_1$ ;
$R_2$ : den Ohmwert des zweiten ohmschen Widerstandes $R_2$ ;
$U_{BE}$ : die jeweilige, jeweils gleichgroße Basis-Emitter-Spannung der Transistoren $T_7$, $T_8$ und $T_9$ ;
$I_C(T_8)$ : den Kollektorstrom des achten Transistors $T_8$ ;
$B$ : die Stromverstärkung des achten Transistors $T_8$.
Für den Temperaturkoeffizienten der Teilspannung $U_N$ gilt dann näherungsweise :

$$(3) \qquad TK_U = \left(1 + \frac{R_1}{R_2}\right) \cdot 2\, TK_{BE} + R_1 \cdot I_C(T_8) \cdot \frac{1}{B} (K_R - K_B) .$$

Hierin bedeuten :
$TK_{BE}$ : den jeweiligen, jeweils gleich großen Temperaturkoeffizienten der Basis-Emitter-Spannungen der Transistoren $T_7$, $T_8$ und $T_9$ ;
$K_R$ : eine einfache Näherung für den Temperaturkoeffizienten der Widerstände $R_1$ und $R_2$ ;
$K_B$ : eine einfache Näherung für den Temperaturkoeffizienten der Stromverstärkung $B$.
Die Spannungsquelle mit positivem Temperaturkoeffizienten besteht aus demjenigen Schaltungsteil, der in den Widerstand $R_1$ den zusätzlichen Strom mit positivem Temperaturkoeffizienten einspeist. Dieser Schaltungsteil besteht hier aus den Transistoren $T_2$ bis $T_6$, den Widerständen $R_3$ und $R_4$ und der

Stromquelle $I_{H2}$. Hierbei entsteht am Widerstand $R_4$ die Spannung :

$$(4) \qquad U_{R_4} = 2 \frac{kT}{e} \ln 7 = 2 U_T \ln 7 ,$$

wobei k die Boltzmannkonstante und $U_T$ die Temperaturspannung ist. Für den Strom, der dann aus dem Kollektor des zweiten Transistors $T_2$ in den ersten Widerstand $R_1$ des Spannungsteilers $R_1$, $R_2$ eingespeist wird, gilt somit :

$$(5) \qquad I_P = \frac{1}{R_3} \left\{ 2 U_T \ln 7 - [U_{BE}(T_2) - U_{BE}(T_3)] \right\} .$$

Der Strom $I_P$ erzeugt somit eine Spannung $U_P$, die sich zur Spannung $U_N$ des « $U_{BE}$-Verstärkers » addiert :

$$(6) \qquad U_P = \frac{R_1}{R_3} \left\{ 2 U_T \ln 7 - [U_{BE}(T_2) - U_{BE}(T_3)] \right\} .$$

Der Temperaturkoeffizient dieser Spannung ist positiv und ergibt sich zu :

$$(7) \qquad TK_P = \frac{R_1}{R_3} \left\{ 2 \frac{k}{e} \ln 7 - [TK_{BE}(T_2) - TK_{BE}(T_3)] \right\} .$$

Die Gesamtspannung $U_S$ des Temperatursensors nach Figur 6 ergibt sich dann aus Gleichung (1) mit $U_P$ und $U_N$ aus den Gleichungen (6) und (2). Der Temperaturkoeffizient $TK_S$ des Sensors ergibt sich aus

$$(8) \qquad TK_S = TK_P + TK_N$$

mit $TK_P$ und $TK_N$ aus den Gleichungen (7) und (3), wobei $TK_P$ und $TK_N$ ihrerseits von $U_P$ und $U_N$ abhängige Größen sind.

Man sieht, daß beispielsweise eine vorgegebene Sensorspannung $U_S$ mit verschiedenen Werten von $U_P$ und $U_N$ erreicht werden kann, wobei sich je nach der Aufteilung von $U_S$ auf $U_P$ und $U_N$ unterschiedliche Temperaturkoeffizienten $TK_S$ für die Sensorspannung $U_S$ ergeben. Die Einstellung des Anteils $U_P$ mit positivem Temperaturkoeffizienten erfolgt am ersten Widerstand $R_1$ des Spannungsteilers $R_1$, $R_2$. Der Anteil $U_N$ mit negativem Temperaturkoeffizienten wird über das Verhältnis $R_1/R_2$, also am zweiten Widerstand $R_2$ eingestellt.

Zum Abgleich des Sensors wird die Spannung am dritten Widerstand $R_3$ gemessen. Sie ergibt sich nach Gleichung (5) zu :

$$(5a) \qquad U_{R_3} = 2 U_T \ln 7 - [U_{BE}(T_2) - U_{BE}(T_3)] .$$

Weiterhin werden die Basis-Emitter-Spannung der « Parallelschaltung » des seibten und neunten Transistors $T_7$ und $T_9$ für einen vorgegebenen Strom sowie die Stromverstärkung B des achten Transistors $T_8$ gemessen. Aus diesen Größen und den vorgegebenen Werten für die Ausgangsspannung und den Temperaturkoeffizienten des Sensors können die Zielwerte des ersten und zweiten Widerstandes $R_1$ und $R_2$ bestimmt werden. Der zweite Widerstand $R_2$ wird dann auf diesen Zielwert eingestellt. Anschließend wird die Ausgangsspannung des Sensors beispielsweise bei 25 °C am ersten Widerstand $R_1$ abgeglichen.

In Figur 7 ist ein weiteres Ausführungsbeispiel eines erfindungsgemäßen Sensors gezeigt, das eine Weiterbildung des Ausführungsbeispiels nach Figur 6 darstellt. Die Stromquelle $I_{H2}$ aus Figur 6 wird hier durch eine Stromspiegelschaltung gebildet, die aus einem zehnten Transistor $T_{10}$ und einem als Diode geschalteten elften Transistor $T_{11}$ besteht, die beide als pnp-Transistoren ausgebildet sind, wobei der zehnte Transistor $T_{10}$ im Kollektorkreis des sechsten Transistors $T_6$ und der elfte Transistor $T_{11}$ im Kollektorkreis des achten Transistors $T_8$ angeordnet ist, so daß beim Ausführungsbeispiel nach Figur 7 der Ausgangsstrom der Stromquelle $I_{H2}$ aus Figur 6 durch Spiegelung des Kollektorstroms des achten Transistors $T_8$ gebildet wird. Die Größe von $I_{H2}$ wird durch das Emitterverhältnis von $T_{10}$ und $T_{11}$ bestimmt.

Beim Ausführungsbeispiel nach Figur 7 ist ferner zusätzlich eine strombegrenzende Schutzschaltung vorgesehen, die die Stromaufnahme des Sensors auf einen höchstzulässigen Wert begrenzt. In den Kollektorkreis des siebten Transistors $T_7$ ist hierzu ein fünfter ohmscher Widerstand $R_5$ eingeschaltet, dem die Emitter-Basis-Strecke eines zwölften, als pnp-Transistor ausgebildeten Transistors $T_{12}$ parallel-

geschaltet ist. Der Kollektor des zwölften Transistors $T_{12}$ ist mit dem Emitter des siebten Transistors $T_7$ über einen sechsten ohmschen Widerstand $R_6$ verbunden und außerdem an die Basis eines dreizehnten, als npn-Transistor ausgebildeten Transistors $T_{13}$ angeschlossen, dessen Emitter an den Emitter des siebten Transistors $T_7$ und dessen Kollektor an den Abgriff des Spannungsteilers $R_1$, $R_2$ angeschlossen ist.

Die Wirkungsweise der strombegrenzenden Schutzschaltung ist folgende :

Übersteigt die Stromaufnahme des siebten Transistors $T_7$ und damit der Spannungsabfall am fünften Widerstand $R_5$ einen durch die Basis-Emitter-Spannung des zwölften Transistors $T_{12}$ bestimmten Wert, so wird der zwölfte Transistor $T_{12}$ leitend. Der dann über den sechsten Widerstand $R_6$ angesteuerte dreizehnte Transistor $T_{13}$ begrenzt darauf den Basisstrom des achten Transistors $T_8$ und damit die gesamte Stromaufnahme der Schaltung.

In Figur 8 ist die Strom-Spannungs-Kennlinie des Sensors nach Figur 7 dargestellt. Diese Kennlinie teilt sich, wie aus Figur 8 erkennbar, in drei Bereiche auf :

a) das Anlaufgebiet A-B,
b) den aktiven Bereich B-C,
c) den Bereich der Strombegrenzung C-D.

Wird der Sensor in seinem aktiven Bereich (im Arbeitspunkt AP) mit einem von der Stromquelle $I_S$ gelieferten konstanten Strom (ca. 1 mA) angesteuert, so stellt sich zwischen seinen beiden Ausgangsklemmen $K_1$ und $K_2$ die temperaturabhängige Spannung $U_S(T)$ ein. Aufgrund des geringen differentiellen Widerstandes, den der Sensor im aktiven Bereich besitzt, ist die temperaturabhängige Spannung $U_S$ relativ unempfindlich gegen Schwankungen des Stromes $I_S$.

## Patentansprüche

1. Spannungsgebender Temperatursensor, in den ein mindestens annähernd konstanter Strom ($I_S$) eingeprägt wird, mit einem aus einem ersten und einem zweiten ohmschen Widerstand gebildeten Spannungsteiler ($R_1$, $R_2$) und mit einem als Ausgangstransistor dienenden ersten Transistor ($T_1$), der mit seiner Basis-Kollektor-Strecke über dem ersten Widerstand ($R_1$) und mit seiner Basis-Emitter-Strecke über dem zweiten Widerstand ($R_2$) des Spannungsteilers ($R_1$, $R_2$) liegt, wobei die Ausgangsspannung ($U_S$) des Sensors an der Emitter-Kollektor-Strecke des ersten Transistors ($T_1$) abgenommen wird, dadurch gekennzeichnet, daß in den ersten Widerstand ($R_1$) des Spannungsteilers ($R_1$, $R_2$) durch Einspeisung eines Hilfsstroms ($I_P$) mittels einer über dem zweiten Widerstand ($R_2$) angebrachten Hilfsstromquelle ($I_P$) eine Hilfsspannung ($U_P$) mit positivem Temperaturkoeffizienten eingeprägt wird.

2. Sensor nach Anspruch 1, dadurch gekennzeichnet, daß zur Einprägung der Hilfsspannung ($U_P$) in den ersten Widerstand ($R_1$) des Spannungsteilers ($R_1$, $R_2$) ein als Steuertransistor dienender zweiter Transistor ($T_2$) vorgesehen ist, dessen Kollektor mit dem Abgriff des Spannungsteilers ($R_1$, $R_2$) verbunden ist und der mit seinem Emitter über einen dritten ohmschen Widerstand ($R_3$) mit dem Emitter des ersten Transistors ($T_1$) verbunden ist, wobei zwischen die Basis des zweiten Transistors ($T_2$) und den Emitter des ersten Transistors ($T_1$) eine Steuerspannung ($U_P'$) angeschlossen ist, deren Temperaturkoeffizient positiv, zumindest aber absoulut größer als der der Basis-Emitter-Spannung des zweiten Transistors ($T_2$) ist.

3. Sensor nach Anspruch 2, dadurch gekennzeichnet, daß zur Bildung der Steuerspannung ($U_P'$) zwischen die Basis des zweiten Transistors ($T_2$) und den Emitter des ersten Transistors ($T_1$) die Reihenschaltung aus einer in Flußrichtung betriebenen Diode (D) und einem vierten ohmschen Widerstand ($R_4$) angeschlossen ist und zwischen den Kollektor des ersten Transistors ($T_1$) und die Basis des zweiten Transistors ($T_2$) eine Stromquelle ($I_{H1}$) mit positivem Temperaturkoeffizienten angeschlossen ist.

4. Sensor nach Anspruch 2, dadurch gekennzeichnet, daß zur Bildung der Steuerspannung ($U_P'$) zwischen die Basis des zweiten Transistors ($T_2$) und den Emitter des ersten Transistors ($T_1$) die Reihenschaltung aus der Basis-Emitter-Strecke eines dritten Transistors ($T_3$) und einem vierten ohmschen Widerstand ($R_4$) angeschlossen ist, dessen mit dem dritten ohmschen Widerstand ($R_3$) verbundenes Ende außerdem mit dem Emitter eines vierten Transistors ($T_4$) verbunden ist, wobei die Basis des vierten Transistors ($T_4$) an den Kollektor des dritten Transistors ($T_3$) und die Basis des dritten Transistors ($T_3$) an den Kollektor des vierten Transistors ($T_4$) angeschlossen ist, daß ferner ein fünfter Transistor ($T_5$) vorgesehen ist, dessen Emitter an den Kollektor des dritten Transistors ($T_3$) und dessen Basis an die Basis und an den Kollektor eines sechsten Transistors ($T_6$) angeschlossen ist, der mit seinem Emitter an den Kollektor des vierten Transistors ($T_4$) und mit seinem Kollektor über eine Stromquelle ($I_{H2}$) an den Kollektor des fünften Transistors ($T_5$) und an den Kollektor des ersten Transistors ($T_1$) angeschlossen ist.

5. Sensor nach einem der Ansprüche 1 bis 4, dadurch gekennzeichnet, daß der erste, als Ausgangstransistor dienende Transistor ($T_1$) einen siebten Transistor ($T_7$) und einen achten Transistor ($T_8$) enthält, die in Darlingtonschaltung miteinander verbunden sind, wobei die Ausgangsspannung ($U_S$) des Sensors an der Emitter-Kollektor-Strecke des siebten Transistors ($T_7$) abgenommen wird und die Basis des achten Transistors ($T_8$) am Abgriff des Spannungsteilers ($R_1$, $R_2$) liegt.

6. Sensor nach Anspruch 5, dadurch gekennzeichnet, daß ein als Emitter-Basis-Diode geschalteter neunter Transistor (T$_9$) vorgesehen ist, dessen Emitter-Basis-Strecke parallel zur Emitter-Basis-Strecke des siebten Transistors (T$_7$) angeordnet ist.

7. Sensor nach den Ansprüchen 4 und 5, dadurch gekennzeichnet, daß der Ausgangsstrom der Stromquelle (I$_{H2}$) durch Spiegelung des Kollektorstroms des achten Transistors (T$_8$) gebildet wird.

8. Sensor nach Anspruch 7, dadurch gekennzeichnet, daß zur Spiegelung des Kollektorstroms des achten Transistors (T$_8$) eine Stromspiegelschaltung vorgesehen ist, die aus einem zehnten Transistor (T$_{10}$) und einem als Diode geschalteten elften Transistor (T$_{11}$) besteht.

9. Sensor nach einem der Ansprüche 1 bis 8, dadurch gekennzeichnet, daß eine strombegrenzende Schutzschaltung vorgesehen ist, die die Stromaufnahme des Sensors auf einen höchstzulässigen Wert begrenzt.

10. Sensor nach Anspruch 9, dadurch gekennzeichnet, daß in den Kollektorkreis des ersten Transistors (T$_1$) oder des siebten Transistors (T$_7$) ein fünfter ohmscher Widerstand (R$_5$) eingeschaltet ist, dem die Emitter-Basis-Strecke eines zwölften Transistors (T$_{12}$) parallelgeschaltet ist, dessen Kollektor über einen sechsten ohmschen Widerstand (R$_6$) mit dem Emitter des ersten Transistors (T$_1$) oder mit dem Emitter des siebten Transistors (T$_7$) verbunden ist und außerdem an die Basis eines dreizehnten Transistors (T$_{13}$) angeschlossen ist, dessen Emitter an den Emitter des ersten Transistors (T$_1$) oder an den Emitter des siebten Transistors (T$_7$) und dessen Kollektor an den Abgriff des Spannungsteilers (R$_1$, R$_2$) angeschlossen ist.

## Claims

1. Voltage-transmitting temperature sensor into which an at least approximately constant current (I$_S$) is impressed, comprising a voltage divider (R$_1$, R$_2$) formed of a first and a second ohmic resistor and with a first transistor (T$_1$), which is used as output transistor and the base-collector path of which is connected across the first resistor (R$_1$) and the base-emitter path of which is connected across the second resistor (R$_2$) of the voltage divider (R$_1$, R$_2$), the output voltage (U$_S$) of the sensor being picked up across the emitter-collector path of the first transistor (T$_1$), characterized in that an auxiliary voltage (U$_P$) having a positive temperature coefficient is impressed into the first resistor (R$_1$) of the voltage divider (R$_1$, R$_2$) by feeding in an auxiliary current (I$_P$) by means of an auxiliary-current source (I$_P$) which is connected across the second resistor (R$_2$).

2. Sensor according to Claim 1, characterized in that, for the purpose of impressing the auxiliary voltage (U$_P$) into the first resistor (R$_1$) of the voltage divider (R$_1$, R$_2$), a second transistor (T$_2$), used as control transistor, is provided, the collector of which is connected to the tap of the voltage divider (R$_1$, R$_2$) and the emitter of which is connected via a third ohmic resistor (R$_3$) to the emitter of the first transistor (T$_1$), a control voltage (U$_{P'}$), the temperature coefficient of which is positive but at least absolutely greater than that of the base-emitter voltage of the second transistor (T$_2$), being connected between the base of the second transistor (T$_2$) and the emitter of the first transistor (T$_1$).

3. Sensor according to Claim 2, characterized in that, for the purpose of forming the control voltage (U$_{P'}$), the series circuit of a diode (D) operated in the forward direction and a fourth ohmic resistor (R$_4$) is connected between the base of the second transistor (T$_2$) and the emitter of the first transistor (T$_1$) and a current source (I$_{H1}$) having a positive temperature coefficient is connected between the collector of the first transistor (T$_1$) and the base of the second transistor (T$_2$).

4. Sensor according to Claim 2, characterized in that, for the purpose of forming the control voltage (U$_{P'}$), the series circuit of the base-emitter path of a third transistor (T$_3$) and a fourth ohmic resistor (R$_4$) is connected between the base of the second transistor (T$_2$) and the emitter of the first transistor (T$_1$), the end of which fourth ohmic resistor connected to the third ohmic resistor (R$_3$) also being connected to the emitter of a fourth transistor (T$_4$), in which arrangement the base of the fourth transistor (T$_4$) is connected to the collector of the third transistor (T$_3$) and the base of the third transistor (T$_3$) is connected to the collector of the fourth transistor (T$_4$), that furthermore a fifth transistor (T$_5$) is provided, the emitter of which is connected to the collector of the third transistor (T$_3$) and the base of which is connected to the base and to the collector of a sixth transistor (T$_6$) which is connected with its emitter to the collector of the fourth transistor (T$_4$) and with its collector via a current source (I$_{H2}$) to the collector of the fifth transistor (T$_5$) and to the collector of the first transistor (T$_1$).

5. Sensor according to one of Claims 1 to 4, characterized in that the first transistor (T$_1$), used as output transistor, contains a seventh transistor (T$_7$) and an eighth transistor (T$_8$) which are connected to one another in a Darlington circuit, the output voltage (U$_S$) of the sensor being picked up across the emitter-collector path of the seventh transistor (T$_7$) and the base of the eighth transistor (T$_8$) being connected to the tap of the voltage divider (R$_1$, R$_2$).

6. Sensor according to Claim 5, characterized in that a ninth transistor (T$_9$) connected as emitter-base diode is provided, the emitter-base path of which is arranged in parallel with the emitter-base path of the seventh transistor (T$_7$).

7. Sensor according to Claims 4 and 5, characterized in that the output current of the current source (I$_{H2}$) is formed by balancing the collector current of the eighth transistor (T$_8$).

8. Sensor according to Claim 7, characterized in that, for balancing the collector current of the eighth transistor ($T_8$), a current balancing circuit is provided which consists of a tenth transistor ($T_{10}$) and a diode-connected eleventh transistor ($T_{11}$).

9. Sensor according to one of Claims 1 to 8, characterized in that a current-limiting protection circuit is provided which limits the current consumption of the sensor to a maximum permissible value.

10. Sensor according to Claim 9, characterized in that into the collector circuit of the first transistor ($T_1$) or of the seventh transistor ($T_7$), a fifth ohmic resistor ($R_5$) is inserted which is connected in parallel with the emitter-base path of a twelfth transistor ($T_{12}$), the collector of which is connected via a sixth ohmic resistor ($R_6$) to the emitter of the first transistor ($T_1$) or to the emitter of the seventh transistor ($T_7$) and is also connected to the base of a thirteenth transistor ($T_{13}$), the emitter of which is connected to the emitter of the first transistor ($T_1$) or to the emitter of the seventh transistor ($T_7$) and the collector of which is connected to the tap of the voltage divider ($R_1$, $R_2$).

## Revendications

1. Capteur de température délivrant une tension, dans lequel est véhiculé un courant ($I_S$) au moins approximativement constant, avec un diviseur de tension ($R_1$, $R_2$) formé par une première et une deuxième résistance ohmique, et avec un premier transistor ($T_1$) servant de transistor de sortie, placé avec sa piste base-collecteur sur la première résistance ($R_1$) et avec sa piste base-émetteur sur la deuxième résistance ($R_2$) du diviseur de tension ($R_1$, $R_2$), la tension de sortie ($U_S$) du capteur étant prélevée sur la piste émetteur-collecteur du premier transistor ($T_1$), caractérisé en ce qu'une tension auxiliaire ($U_P$) à coefficient de température positif est véhiculée dans la première résistance ($R_1$) du diviseur de tension ($R_1$, $R_2$) par fourniture d'un courant auxiliaire ($I_P$), au moyen d'une source de courant auxiliaire ($I_P$) montée sur la deuxième résistance ($R_2$).

2. Capteur selon la revendication 1, caractérisé en ce que, pour faire passer la tension auxiliaire ($U_P$) dans la première résistance ($R_1$) du diviseur de tension ($R_1$, $R_2$), il est prévu un deuxième transistor ($T_2$) servant de transistor de commande, dont le collecteur est relié à la prise du diviseur de tension ($R_1$, $R_2$) et qui est relié par son émetteur à l'émetteur du premier transistor ($T_1$), par l'intermédiaire d'une troisième résistance ohmique ($R_3$), une tension de commande ($U_{P'}$) étant raccordée entre la base du deuxième transistor ($T_2$) et l'émetteur du premier transistor ($T_1$), tension dont le coefficient de température est positif, mais au moins plus grand en valeur absolue que celui de la tension base-émetteur du deuxième transistor ($T_2$).

3. Capteur selon la revendication 2, caractérisé en ce que pour former la tension de commande ($U_{P'}$) entre la base du deuxième transistor ($T_2$) et l'émetteur du premier transistor ($T_1$), le circuit série se composant d'une diode (D) exploitée dans le sens traversant et d'une quatrième résistance ohmique ($R_4$) est raccordé et qu'une source de courant ($I_{H1}$) à coefficient de température positif est raccordée entre le collecteur du premier transistor ($T_1$) et la base du deuxième transistor ($T_2$).

4. Capteur selon la revendication 2, caractérisé en ce que pour former la tension de commande ($U_{P'}$) entre la base du deuxième transistor ($T_2$) et l'émetteur du premier transistor ($T_1$), le circuit série composé de la piste base-émetteur d'un troisième transistor ($T_3$) et d'une quatrième résistance ohmique ($R_4$) est raccordé, dont l'extrémité reliée à la troisième résistance ohmique ($R_3$) est en outre reliée à l'émetteur d'un quatrième transistor ($T_4$), la base du quatrième transistor ($T_4$) étant raccordée au collecteur du troisième transistor ($T_3$), et la base du troisième transistor ($T_3$) étant raccordée au collecteur du quatrième transistor ($T_4$), en ce qu'il est en outre prévu un cinquième transistor ($T_5$), dont l'émetteur est raccordé au collecteur du troisième transistor ($T_3$), et dont la base est reliée à la base et au collecteur d'un sixième transistor ($T_6$), qui est raccordé par son émetteur au collecteur du quatrième transistor ($T_4$), et, par son collecteur, par l'intermédiaire d'une source de courant ($I_{H2}$), au collecteur du cinquième transistor ($T_5$) et au collecteur du premier transistor ($T_1$).

5. Capteur selon l'une des revendications 1 à 4, caractérisé en ce que le premier transistor ($T_1$) servant de transistor de sortie, contient un septième ($T_7$) et un huitième transistor ($T_8$) reliés ensemble en montage de Darlington, la tension de sortie ($U_S$) du capteur étant prélevée sur la piste émetteur-collecteur du septième transistor ($T_7$) et la base du huitième transistor ($T_8$) étant placée à la prise du diviseur de tension ($R_1$, $R_2$).

6. Capteur selon la revendication 5, caractérisé en ce qu'il est prévu un neuvième transistor ($T_9$) branché en diode émetteur-base, dont la piste émetteur-base est disposée parallèlement à la piste émetteur-base du septième transistor ($T_7$).

7. Capteur selon les revendications 4 et 5, caractérisé en ce que le courant de sortie de la source de courant ($I_{H2}$) est formé par inversion du courant collecteur du huitième transistor ($T_8$).

8. Capteur selon la revendication 7, caractérisé en ce que, pour l'inversion du courant collecteur du huitième transistor ($T_8$), il est prévu un circuit d'inversion de courant qui se compose d'un dixième transistor ($T_{10}$) et d'un onzième transistor ($T_{11}$) branché en diode.

9. Capteur selon l'une des revendications 1 à 8, caractérisé en ce qu'il est prévu un circuit de protection, limitant la consommation de courant du capteur à une valeur maximale admissible.

10. Capteur selon la revendication 9, caractérisé en ce qu'une cinquième résistance ohmique ($R_5$)

est branchée dans le circuit collecteur du premier transistor (T₁) ou du septième transistor (T₇), en parallèle de laquelle est branchée la piste émetteur-base d'un douzième transistor (T₁₂), dont le collecteur est relié par l'intermédiaire d'une sixième résistance ohmique (R₆) à l'émetteur du premier transistor (T₁), ou à l'émetteur du septième transistor (T₇), et est en outre raccordé à la base d'un treizième transistor (T₁₃), dont l'émetteur est raccordé à l'émetteur du premier transistor (T₁) ou à l'émetteur du septième transistor (T₇) et dont le collecteur est raccordé à la prise du diviseur de tension (R₁, R₂).

FIG.1

FIG.2

FIG.3

FIG.4

FIG.5

FIG.6

FIG.7

FIG.8